# EUROPEAN PATENT SPECIFICATION

(11) **EP 4 295 473 B1**
(45) Date of publication and mention of the grant of the patent: **27.11.2024**
(21) Application number: 23707162.6
(22) Date of filing: 31.01.2023
(51) Int. Cl.: H02K 9/06, H02K 5/15, H02K 15/14

(54) **ALTERNATOR WITH IMPROVED COOLING SYSTEM**
WECHSELSTROMGENERATOR MIT VERBESSERTEM KÜHLSYSTEM
ALTERNATEUR À SYSTÈME DE REFROIDISSEMENT AMÉLIORÉ

(30) Priority: 02.02.2022 IT 202200001745
(43) Date of publication of application: 27.12.2023
(73) Proprietor: M.E.C.C. Alte S.p.A., 36051 Creazzo (VI) (IT)
(72) Inventor: CARRARO, Mario, Roberto, 36100 VICENZA (IT)
(74) Representative: Marchioro, Paolo
(86) International application number: PCT/IB2023/050828
(87) International publication number: WO 2023/148610

(56) References cited:
- EP-A1- 3 430 708
- FR-A1- 2 842 367
- US-A1- 2016 020 665

## Description

The invention concerns an alternator provided with a cooling system of improved type.

As is known, an alternator is a rotating electrical machine that converts rotation mechanical energy provided by a primary motor into electrical energy that is transferred to a user in the form of alternating current.

Prior art alternators with a cooling system are disclosed for example by US 2016/020665 A1, EP 3 430 708 A1 or FR 2 842 367 A1.

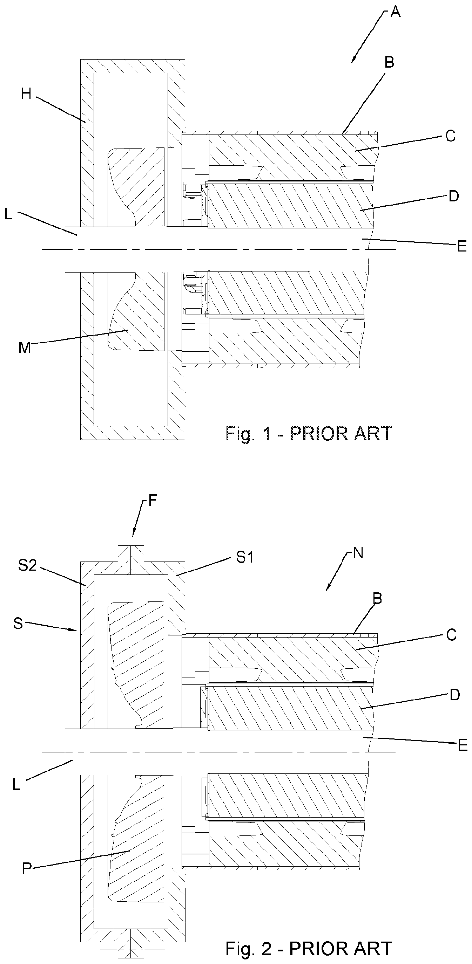

Constructively, an alternator of the prior art is represented in schematic form in Figure 1, where it is indicated overall with **A** and where it can be observed that it comprises a stator case **B** which contains the stator **C** and the rotor **D** with which the rotation shaft **E** is associated.

The stator case **B** is axially comprised between the rear shield, not represented, and the front shield **H** from which the end **L** of the rotation shaft **E** protrudes to which the cooling fan **M** that is housed in the front shield **H** is keyed.

It can be observed that the outer diameter of the fan **M** is smaller than the inner diameter of the stator case **B** and the assembly of the alternator **A** takes place by performing the following operations:
- the fan **M** is applied to the end **L** of the rotation shaft **E;**
- the rotor **D** is inserted by sliding into the stator **C** of the stator case **B;**
- the front shield **H** is fixed to the stator case **B** and the fan **M** is received therein.

When the assembly is completed, the alternator **A** then assumes the configuration represented in Figure 1.

The alternators **A** of the prior art of the type now described have the advantage of mounting simplicity since the front shield **H** is made as a single body and is easily fixed to the stator case **B** after the fan **M** has been fixed to the rotation shaft **E.**

However, these alternators have the drawback that the outer diameter of the fan **M** cannot exceed the inner diameter of the stator case **B** and must be significantly smaller than it since, otherwise, this would prevent the mounting of the front shield **H** and the fixing thereof to the stator case **B.**

Fans of this type could result in insufficient cooling of the alternator and the impossibility of increasing the electrical power that it could deliver.

To overcome these drawbacks and limitations, alternators are made, one of which is schematically represented in Figure 2 where it is indicated overall with **N,** which differ from the alternator **A** just described in that the front shield **5** is made of two parts **S1** and **S2** which can be conjugated to each other by means of flanges **F** or similar means and which allows to accommodate a fan **P** whose outer diameter is greater than the outer diameter of the stator case **B.**

Alternators of this type have the advantage that the fan **P** with increased diameter than the outer diameter of the stator case improve cooling and this allows to increase the power that the alternator is able to deliver.

Mounting the alternators of this type involves the execution of the following operations:
- fixing the first part **S1** of the front shield **5** to the stator case **B;**
- applying the fan **P** to the rotation shaft **E;**
- inserting by sliding the rotor **D** into the stator **C** of the stator case **B** and the fan **P** into the first part **S1** of the front shield **S;**
- closing the front shield **5** by fixing the second part **S2** to the first part **S1** using the flanges **F.**

It is understood that this embodiment involves first of all a higher cost for making the front shield **5** which must be made up of two parts provided with flanges **F** and with fixing means for their mutual connection.

In addition, this embodiment also has a higher mounting cost due to the longer assembly times for the connection of the two parts **S1** and **S2** that make up the front shield **5.**

The present invention is intended to overcome the drawbacks of the prior art which have been described hereinabove.

Specifically, the present invention aims to realize an alternator provided with a cooling fan whose outer diameter is greater than the outer diameter of the stator case that is housed in a front shield made as a single monoblock body. The present invention also aims to realize a method that, in an alternator provided with a cooling fan with outer diameter greater than the outer diameter of the stator case and with a front shield made as a single monoblock body, allows to assemble the cooling fan to the rotor shaft before mounting the front shield on the stator case.

The aim listed are achieved by the alternator having the characteristics according to claim 1 to which reference will be made and by the mounting method according to claim 9.

In the alternator of the invention, the advantages deriving from the simplicity of construction and mounting that can be found in alternators with cooling fan with a diameter smaller than the outer diameter of the stator case are combined with the advantages deriving from the use of a cooling fan with an increased diameter than the outer diameter of the stator case. Advantageously, in fact, the use of the cooling fan with increased diameter improves the cooling of the alternator allowing to increase the deliverable power thereof.

In addition, advantageously, the use of a front shield in a single monoblock body and therefore with simpler and more economical construction also facilitates the mounting operations of the alternator.

The aims and advantages listed, and any others, will be better highlighted below during the description of a preferred, but not exclusive, embodiment of the alternator of the invention, which is given below for indicative and not exclusive purposes only with reference to the appended drawing tables, in which:
- Figures 1 and 2 represent in schematic form and in longitudinal section two different embodiments of an alternator of the prior art;
- Figure 3 represents the alternator of the invention in axonometric view from the front shield side;
- Figure 4 represents the alternator of the invention in axonometric view from the rear shield side;
- Figure 5 represents the alternator of the invention in longitudinal section;
- Figure 6 represents an exploded view of the alternator of the invention;
- Figure 7 represents an exploded axonometric view of the alternator of the invention;
- Figure 8 represents an enlarged axonometric view of a part of the alternator of the invention;
- Figure 9 represents another enlarged axonometric view of a part of the alternator of the invention.

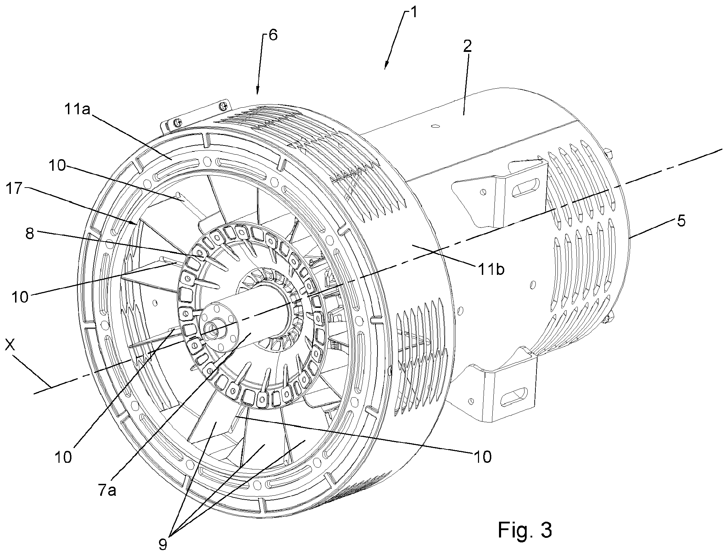

The alternator object of the invention is represented in different views in Figures 3 to 6 where it is indicated overall with **1.**

It can be observed that the alternator **1** comprises a stator case **2** which houses a stator winding **3** and a rotor **4,** the latter inserted coaxially inside the stator winding **3.**

A rear shield **5** and a front shield **6** axially delimit the stator case **2,** both being removably fixed to the ends of the same stator case **2** by means of removable connection means of known type, preferably but not exclusively bolts.

The rotor **4** is associated with a rotation shaft **7** which identifies a longitudinal axis **X** of rotation and which has a first end **7a** protruding from the front shield **6.**

There is also a cooling fan **8** that protrudes from the stator case **2** and is keyed to the first end **7a** of the rotation shaft **7.**

The fan **8** is peripherally provided with a plurality of blades **9** and has the outer diameter greater than the outer diameter of the stator case **2.**

It can also be observed that the front shield **6** has a box shape and according to the invention in it there is a plurality of slits **10** which are configured to allow the passage of the blades **9** of the fan **8.**

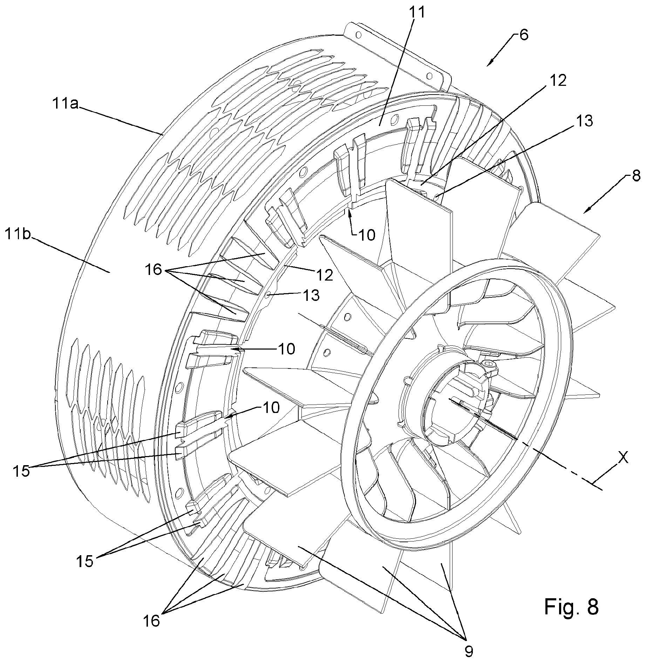

This occurs when the front shield **6** is first positioned as it can be observed in particular in Figure 8, so that each slit **10** is aligned with a corresponding blade **9** of the fan **8,** and then shifted axially towards the fan **8** according to the direction defined by the longitudinal axis **X** of the rotation shaft **7.**

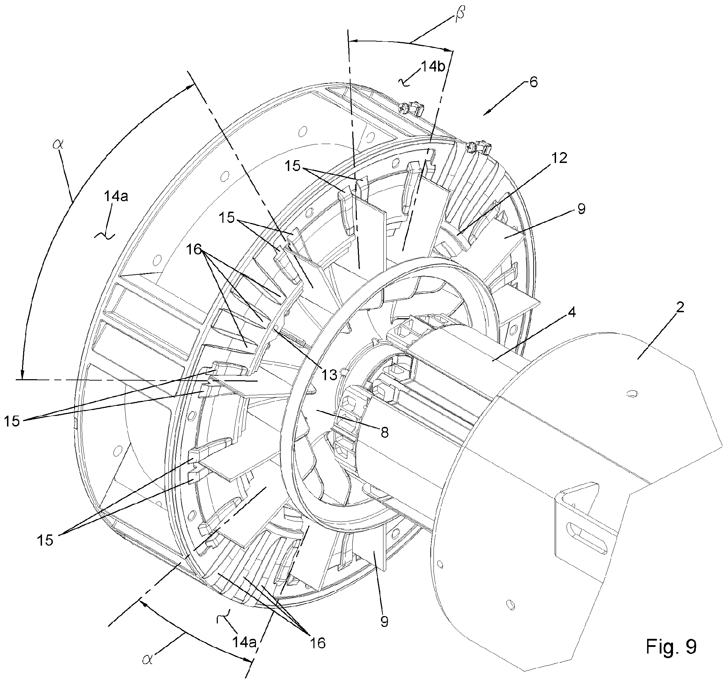

In this way, each blade **9** passes through a respective slit **10,** as it can be observed in Figure 9, until the front shield **6** receives the fan **8** and is arranged close to the stator case **2** to which it is finally fixed at the flange ring **2a** visible in Figure 9 by means of the removable connection means.

As far as the front shield **6** is concerned, it can be observed that its box shape is defined by a rear plane **11** in which the slits **10** are made, by a front plane **11a** facing and spaced from the rear plane **11** and by a lateral surface **11b** peripherally fixed to the rear **11** and front **11a** planes.

The front plane **11a** could be substantially closed, apart from the first end **7a** of the rotation shaft **7** coming out, for complete protection against accidental contact by the operator with the blades **9,** or, according to the preferred embodiment of the invention, as represented in Figure 3, it could be centrally drilled so as to define a first annular abutment zone **17** for the coupling of an outer main motor, not represented in the figures, the latter acting to rotate the aforementioned rotation shaft **7.**

According to the invention, the outer diameter of the plurality of blades **9** of the fan **8** is greater than the diameter of such first annular abutment zone **17.**

In any case, the front shield **6** also acts as a protective casing against accidental contact by the operator with the blades **9** of the fan **8.**

Preferably, the front shield **6** is made as a single body.

Furthermore, in the embodiment being described, the front shield **6** has a cylindrical box shape, but this is only one of the many possible embodiments in which it can be made.

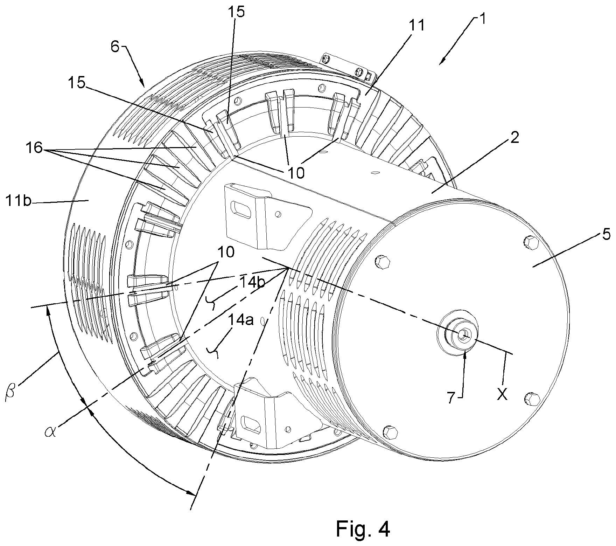

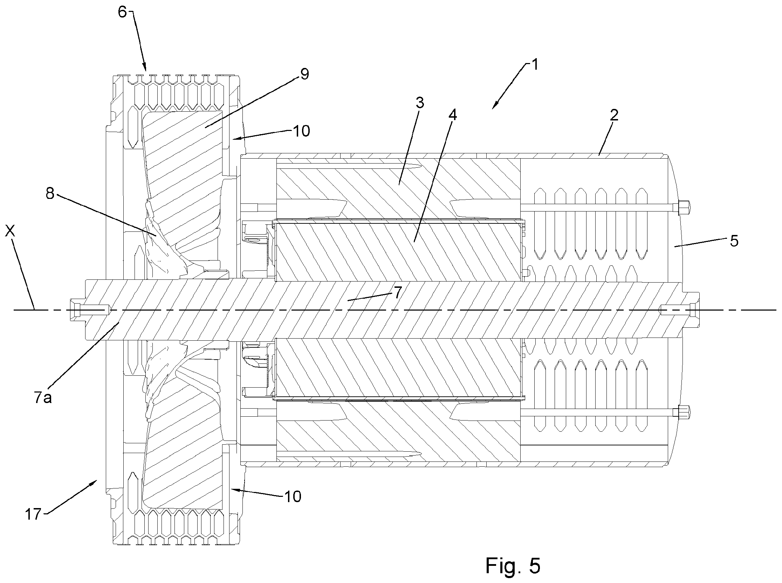

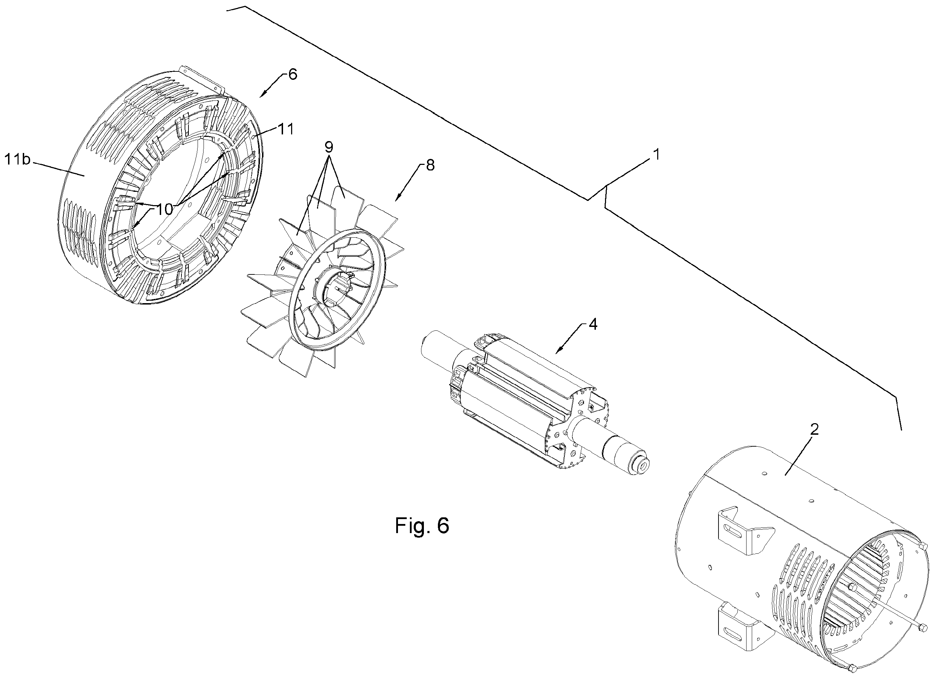

Referring also to the detailed Figures 6 to 9, it can be observed that, according to the preferred embodiment of the invention, in the rear plane **11** of the front shield **6** in which the slits **10** are made, there is also a second annular abutment zone **12** which is configured to couple with the stator case **2** when the front shield **6** is arranged close to the stator case **2,** as can be observed particularly in Figures 4 and 5.

The fixing of the front shield **6** to the stator case **2** takes place by means of removable connection means which, as it has been said, preferably but not exclusively comprise bolts, which are inserted into through holes **13** present in the second annular abutment zone **12** of the rear plane **11** and in the profile of the stator case **2.**

According to the preferred embodiment of the invention, the profiles of the blades **9** of the fan **8** develop according to a plane orthogonal to the longitudinal axis **X** defined by the rotation shaft **7** and parallel to the rear plane **11** of the front shield **6.**

Furthermore, preferably but not necessarily, the slits **10** and the blades **9** have straight profiles that develop in a radial direction with respect to the rotation shaft **7.**

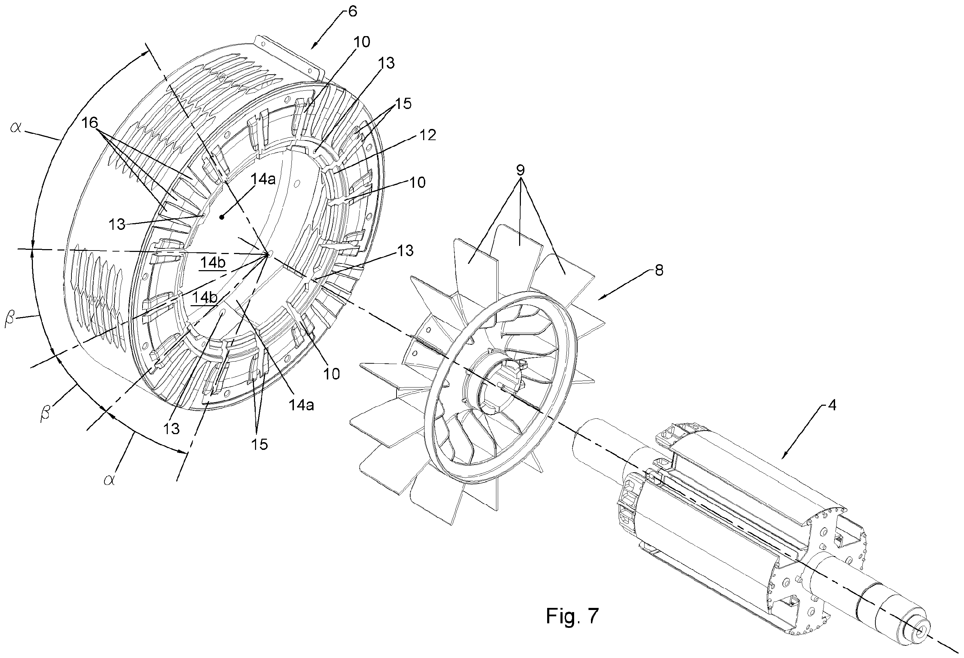

With reference to Figures 7 to 9, it can be observed that each of the through holes **13** belongs to a first angular zone **14a** of the rear plane **11** which is comprised between two slits **10** which are consecutive to each other that define a first angle **α** between them.

In addition, in the rear plane **11** there can be also identified second angular zones **14b** each of which is comprised between two slits **10** which are consecutive to each other, of which at least one external to the aforementioned first angular zone **14,** which define between them a second angle **β** whose width is less than the width of the first angle **α**.

Since the presence of the slits **10** creates a structural weakening of the rear plane **11,** according to the preferred embodiment of the invention, this weakening is overcome by delimiting each slit **10** with two lateral ribs **15,** one arranged at one edge and another arranged at the opposite edge of the same slit **10.**

Furthermore, still preferably but not necessarily, each first angular zone **14** of the rear plane **11** is also stiffened by arranging in it central ribs **16** which are comprised between the lateral ribs **15** of the two slits **10** that delimit the angular zone **14.**

In the embodiment described, in each angular zone **14** there are five stiffening bodies which comprise two lateral ribs **15** each arranged at the side of a respective slit **10** and three central ribs **16** comprised between the two aforementioned lateral ribs **15.**

Obviously, in other embodiments the number of ribs may be different. Preferably but not necessarily, the lateral ribs **15** and the central ribs **16** are projecting from the rear plane **11** and facing towards the stator case **2** and develop in a radial direction with respect to the rotation shaft **7.**

The described embodiment therefore achieves the aim of the invention to realize an alternator **1** provided with a cooling fan whose outer diameter is greater than the outer diameter of the stator case, said fan being housed in a front shield made as a single monoblock body.

In fact, it has been seen that the presence of the slits **10** made in the front shield **6** allows the passage of the blades **9** of the fan **8** and therefore allows the front shield **6** to be made as a single body and to couple it to the stator case **2.**

In addition, the use of a front shield **6** in single body makes the mounting operations of the alternator **1** simpler, faster and less expensive.

Operationally, for assembling the alternator **1** it is first necessary to provide: the stator case **2,** the rotor **4,** the rotation shaft **7,** the fan **8,** the rear shield **5** and the front shield **6** together with other auxiliary materials such as the removable connection means of the rear **5** and front **6** shields to the stator case **2.**

The rotation shaft **7** is then coupled to the rotor **4** and the rear shield **5** is then fixed to the stator case **2.**

With particular reference to Figures 6 and 7, according to the preferred embodiment of the invention, the rotor **4** with the rotation shaft **7** is inserted inside the stator case **2.**

The fan **8** is then assembled to the first end **7a** of the rotation shaft **7** that protrudes from the stator case **2** from the opposite side of the rear shield **5.**

It is not excluded, however, that according to different embodiments of the invention the series of operating steps described so far can be performed in a different order.

For example, the fan **8** could be assembled at the first end **7a** of the rotation shaft **7** prior to the insertion of the rotor **4** with the same rotation shaft **7** inside the stator case **2.**

At this point the front shield **6** is arranged coaxial to the first end **7a** of the rotation shaft **7** positioning each of the slit **10** thereof aligned with a corresponding blade **9** of the fan **8.**

According to the preferred embodiment of the invention, then the front shield **6** is axially shifted towards the stator case **2** making sure that each blade **9** passes through a corresponding slit **10** until the front shield **6** receives the fan **8** and its second annular abutment zone **12** abuts against the stator case **2.**

It is also not excluded that according to different embodiments of the method of the invention the aforementioned steps of coupling the front shield **6** with the fan **8** can be performed prior to the insertion of the rotor **4** with the rotation shaft **7** inside the stator case **2.**

In any case, the front shield **6** is then fixed to the stator case **2** by means of the removable connection means and the assembly of the alternator **1** is thus completed.

The description highlights that the assembly of the alternator **1** of the invention, with respect to equivalent alternators of the prior art provided with a fan with diameter greater than the outer diameter of the stator case and also greater than the diameter of the first annular abutment zone **17** for the coupling of the main motor, is made easier and faster since it uses the front shield **6** made as a single monoblock body but provided with slits **10** for the passage of the blades **9** of the cooling fan **8.**

In fact, the mounting steps of the alternator **1** of the invention are the same as those that have been briefly listed in the introductory part to describe the assembly of any alternator of the prior art having the cooling fan with outer diameter smaller than the outer diameter of the stator case.

Furthermore, the assembly of the alternator of the invention is also faster and therefore less expensive than equivalent alternators of the prior art that fit a front shield made up of two parts that need to be coupled together by means of connection members, for example flanges with screws or bolts.

In the execution phase, modifications and variants not described and not represented in the figures may be made to the alternator of the invention and if such modifications and variants should fall within the scope of the claims that follow they should all be considered protected by the present invention.

## Claims

1. Alternator (1) comprising:
- a stator case (2) containing a stator winding (3) and a rotor (4), the latter inserted coaxially inside said stator winding (3);
- a rear shield (5) and a front shield (6) both removably fixed to said stator case (2) by means of removable connection means;
- a rotation shaft (7) identifying a longitudinal axis (X), coaxially associated with said rotor (4);
- a cooling fan (8) provided with a plurality of blades (9) and keyed to a first end (7a) of said rotation shaft (7), said fan (8) having the outer diameter greater than the outer diameter of said stator case (2) and being protruding from said stator case (2),
**characterized in that** in said front shield (6) there is a plurality of slits (10) which are configured to allow the passage of said blades (9) of said fan (8) when said front shield (6) is first positioned so that each slit (10) is aligned with a corresponding blade (9) and then shifted axially towards said fan (8) according to said longitudinal direction (X) so that each blade (9) passes through the corresponding slit (10) so that said fan (8) is received in said front shield (6) and that said front shield (6) is finally fixed to said stator case (2) by means of said removable connection means.

2. Alternator (1) according to claim 1, **characterized in that** said front shield (6) is made as a single body.

3. Alternator (1) according to any one of the preceding claims, **characterized in that** said front shield (6) has a box shape and comprises a rear plane (11) in which there are said slits (10) and an annular abutment zone (12) configured to couple with said stator case (2).

4. Alternator (1) according to claim 3, **characterized in that** said front shield (6) also comprises a front plane (11a) spaced and facing from/onto said rear plane (11) and a lateral surface (11b) arranged peripherally to said rear plane (11) and to said front plane (11a).

5. Alternator (1) according to any one of the preceding claims, **characterized in that** said blades (9) and said slits (10) have straight profiles that develop in a radial direction with respect to said longitudinal axis (X) defined by said rotation shaft (7).

6. Alternator (1) according to any one of claims 3 to 5, **characterized in that** in said annular abutment zone (12) there are through holes (13) which are configured to accommodate removable connection means connecting said front shield (6) to said stator case (2), each of said through holes (13) being arranged at a first angular zone (14a) of said rear plane (11) which is comprised between two of said slits (10) that are consecutive to each other which define a first angle (α).

7. Alternator (1) according to claim 6, **characterized in that** in said rear plane (11) there are also second angular zones (14b) each of which is comprised between two slits (10) that are consecutive to each other, of which at least one external to a respective first angular zone (14a), which define between them a second angle (β) whose width is less than the width of said first angle (α).

8. Alternator (1) according to any one of claims 6 or 7, **characterized in that** in said rear plane (11) there are stiffening bodies comprising:
- lateral ribs (15) that delimit said slits (10) and which are arranged one at one edge and the other at the opposite edge of each of said slits (10);
- central ribs (16) which are present within each of said first angular zones (14a) and which are comprised between said lateral ribs (15) that delimit each of said first angular zones (14a).

9. Alternator (1) according to claim 8, **characterized in that** said lateral ribs (15) and said central ribs (16) are projecting from said rear plane (11) and develop in a radial direction with respect to said rotation shaft (7).

10. Method for mounting said alternator (1) according to any one of the preceding claims comprising the following operations:
- providing said stator case (2), said rotor (4), said rotation shaft (7), said fan (8), said rear shield (5) and said front shield (6);
- fixing said rear shield (5) to said stator case (2);
- coupling said rotation shaft (7) to said rotor (4);
- inserting said rotor (4) with said rotation shaft (7) inside said stator case (2) until said first end (7a) protrudes from the opposite side of said rear shield (5);
- assembling said fan (8) to said first end (7a) of said rotation shaft (7) protruding from said stator case (2) from the opposite side of said rear shield (5);
- arranging said front shield (6) coaxial to said first end (7a) of said rotation shaft (7);
- axially shifting said front shield (6) towards said stator case (2),
**characterized in that** said axial shift of said front shield (6) occurs after alignment of each slit (10) to a corresponding blade (9) of said fan (8) so that each blade (9) passes through a corresponding slit (10) until said front shield (6) receives said fan (8) and is then fixed to said stator case (2) by means of said removable connection means.

## Patentansprüche

1. Wechselstromgenerator (1), umfassend:
- ein Statorgehäuse (2), das eine Statorwicklung (3) und einen Rotor (4) enthält, wobei letzterer in der besagten Statorwicklung (3) koaxial eingesetzt ist;
- einen hinteren Schild (5) und einen vorderen Schild (6), die beide durch entfernbare Verbindungsmittel am besagten Statorgehäuse (2) entfernbar befestigt;
- eine Drehwelle (7), die eine Längsachse (X), die dem besagten Rotor (4) koaxial zugeordnet ist, identifiziert;
- ein Kühlgebläse (8), das mit einer Vielzahl von Flügeln (9) versehen ist und an einem ersten Ende (7a) der besagten Drehwelle (7) festgekeilt ist, wobei das besagte Kühlgebläse (8) einen Außendurchmesser aufweist, der größer ist als der Außendurchmesser des besagten Statorgehäuses (2), und vom besagten Statorgehäuse (2) vorsteht,
**dadurch gekennzeichnet, dass** im besagten vorderen Schild (6) eine Vielzahl von Schlitzen (10) vorhanden ist, die konfiguriert sind, um den Durchgang der besagten Flügel (9) des besagten Kühlgebläses (8) zu ermöglichen, wenn der besagte vordere Schild (6) zuerst so positioniert ist, dass jeder Schlitz (10) mit einer entsprechenden Flügel (9) ausgerichtet ist und dann zum besagten Kühlgebläse (8) gemäß der besagten Längsrichtung (X) axial verschoben wird, sodass jeder Flügel (9) durch den entsprechenden Schlitz (10) hindurchgeht, sodass das besagte Kühlgebläse (8) im besagten vorderen Schild (6) aufgenommen wird und der besagte vordere Schild (6) schließlich mittels der besagten entfernbaren Verbindungsmittel am besagten Statorgehäuse (2) befestigt wird.

2. Wechselstromgenerator (1) nach Patentanspruch 1, **dadurch gekennzeichnet, dass** der besagte vordere Schild (6) als ein einziger Körper hergestellt ist.

3. Wechselstromgenerator (1) nach jeglichem der vorhergehenden Patentansprüche, **dadurch gekennzeichnet, dass** der besagte vordere Schild (6) eine Kastenform aufweist und eine hintere Ebene (11), in der sich die besagten Schlitze (10) befinden, und einen ringförmigen Anlagebereich (12), der zum Koppeln mit dem besagten Statorgehäuse (2) konfiguriert ist, umfasst.

4. Wechselstromgenerator (1) nach Patentanspruch 3, **dadurch gekennzeichnet, dass** der besagte vordere Schild (6) ferner Folgendes umfasst: eine vordere Ebene (11a), die von der besagten hinteren Ebene (11) beabstandet und dieser abgewandt/zugewandt ist, und eine seitliche Fläche (11b), die an der besagten hinteren Ebene (11) und an der besagten vorderen Ebene (11a) umlaufend angeordnet ist.

5. Wechselstromgenerator (1) nach jeglichem der vorhergehenden Patentansprüche, **dadurch gekennzeichnet, dass** die besagten Flügel (9) und die besagten Schlitze (10) gerade Profile aufweisen, die sich in einer radialen Richtung in Bezug auf die besagte Längsachse (X), die durch die besagte Drehwelle (7) definiert ist, entwickeln.

6. Wechselstromgenerator (1) nach jeglichem der Patentansprüche 3 bis 5, **dadurch gekennzeichnet, dass** im besagten ringförmigen Anlagebereich (12) Durchgangslöcher (13) vorhanden sind, die konfiguriert sind, um entfernbare Verbindungsmittel, die den besagten vorderen Schild (6) mit dem besagten Statorgehäuse (2) verbinden, unterzubringen, wobei jedes der besagten Durchgangslöcher (13) in einem ersten Winkelbereich (14a) der besagten hinteren Ebene (11) angeordnet ist, der zwischen zwei der besagten Schlitze (10) enthalten ist, die aufeinander folgen und einen ersten Winkel **(α)** definieren.

7. Wechselstromgenerator (1) nach Patentanspruch 6, **dadurch gekennzeichnet, dass** in der besagten hinteren Ebene (11) ferner zweite Winkelbereiche (14b) vorhanden sind, von denen jeder zwischen zwei aufeinanderfolgenden Schlitzen (10), von denen mindestens einer außerhalb eines jeweiligen ersten Winkelbereichs (14a) liegt, enthalten ist, und die dazwischen einen zweiten Winkel (β), dessen Breite kleiner als die Breite des ersten Winkels (α) ist, definieren.

8. Wechselstromgenerator (1) nach einem der Patentansprüche 6 oder 7, **dadurch gekennzeichnet, dass** in der besagten hinteren Ebene (11) Versteifungskörper vorhanden sind, umfassend:
- seitliche Rippen (15), die die besagten Schlitze (10) begrenzen und von denen eine an einem Rand und die andere am gegenüberliegenden Rand jedes der besagten Schlitze (10) angeordnet ist;
- mittlere Rippen (16), die innerhalb jedes der besagten ersten Winkelbereiche (14a) vorhanden sind und die zwischen den besagten seitlichen Rippen (15), die jeden der besagten ersten Winkelbereiche (14a) begrenzen, enthalten sind.

9. Wechselstromgenerator (1) nach Patentanspruch 8, **dadurch gekennzeichnet, dass** die besagten seitlichen Rippen (15) und die besagten mittleren Rippen (16) von der besagten hinteren Ebene (11) vorstehen und sich in einer radialen Richtung in Bezug auf die besagte Drehwelle (7) entwickeln.

10. Verfahren zum Montieren des besagten Wechselstromgenerators (1) nach jeglichem der vorhergehenden Patentansprüche, das die folgenden Vorgänge umfasst:
- Vorbereiten des besagten Statorgehäuses (2), des besagten Rotors (4), der besagten Drehwelle (7), des besagten Kühlgebläses (8), des besagten hinteren Schilds (5) und des besagten vorderen Schilds (6);
- Befestigen des besagten hinteren Schilds (5) am besagten Statorgehäuse (2);
- Koppeln der besagten Drehwelle (7) mit dem besagten Rotor (4);
- Einsetzen des besagten Rotors (4) mit der besagten Drehwelle (7) in das besagte Statorgehäuse (2), bis das besagte erste Ende (7a) von der gegenüberliegenden Seite des besagten hinteren Schilds (5) vorsteht;
- Anbringen des besagten Kühlgebläses (8) am besagten ersten Ende (7a) der besagten Drehwelle (7), das von der gegenüberliegenden Seite des besagten hinteren Schilds (5) vom besagten Statorgehäuse (2) vorsteht;
- Anordnen des besagten vorderen Schilds (6) koaxial zum besagten ersten Ende (7a) der besagten Drehwelle (7);
- axiales Verschieben des besagten vorderen Schilds (6) zum besagten Statorgehäuse (2),
**dadurch gekennzeichnet, dass** die besagte axiale Verschiebung des besagten vorderen Schilds (6) nach der Ausrichtung jedes Schlitzes (10) mit einer entsprechenden Flügel (9) des besagten Kühlgebläses (8) erfolgt, sodass jeder Flügel (9) durch einen entsprechenden Schlitz (10) hindurchgeht, bis der besagte vordere Schild (6) das besagte Kühlgebläse (8) aufnimmt, und dann mittels der besagten entfernbaren Verbindungsmittel am besagten Statorgehäuse (2) befestigt wird.

## Revendications

1. Alternateur (1) comprenant:
- un boîtier de stator (2) contenant un enroulement de stator (3) et un rotor (4), ce dernier étant inséré coaxialement dans ledit enroulement de stator (3);
- un bouclier arrière (5) et un bouclier avant (6), tous deux fixés de manière amovible audit boîtier de stator (2) par des moyens de connexion amovibles;
- un arbre rotatif (7) identifiant un axe longitudinal (X), associé coaxialement audit rotor (4);
- un ventilateur de refroidissement (8) muni d'une pluralité de pales (9) et fixé à une première extrémité (7a) dudit arbre de rotation (7), ledit ventilateur (8) ayant un diamètre extérieur supérieur au diamètre extérieur dudit boîtier de stator (2) et faisant saillie dudit boîtier de stator (2),
**caractérisé en ce que** ledit bouclier avant (6) est pourvu d'une pluralité de fentes (10) qui sont configurées pour permettre le passage desdites pales (9) dudit ventilateur (8) lorsque ledit bouclier avant (6) est d'abord positionné de manière à ce que chaque fente (10) soit alignée avec une pale correspondante (9) et ensuite déplacé axialement vers ledit ventilateur (8) selon ladite direction longitudinale (X) de manière à ce que chaque pale (9) passe à travers la fente correspondante (10) de sorte que ledit ventilateur (8) est accueilli dans ledit bouclier avant (6) et que ledit bouclier avant (6) est enfin fixé audit boîtier de stator (2) par lesdits moyens de connexion amovibles.

2. Alternateur (1) selon la revendication 1, **caractérisé en ce que** ledit bouclier avant (6) est réalisé en un seul corps.

3. Alternateur (1) selon l'une quelconque des revendications précédentes, **caractérisé en ce que** ledit bouclier avant (6) présente une forme de boîte et comprend un plan arrière (11) dans lequel sont présentes lesdites fentes (10) et une zone de butée annulaire (12) configurée pour s'accoupler avec ledit boîtier de stator (2).

4. Alternateur (1) selon la revendication 3, **caractérisé en ce que** ledit bouclier avant (6) comprend également un plan avant (11a) espacée de et faisant face audit plan arrière (11) et une surface latérale (11b) disposée à la périphérie dudit plan arrière (11) et dudit plan avant (11a).

5. Alternateur (1) selon l'une quelconque des revendications précédentes, **caractérisé en ce que** lesdites pales (9) et lesdites fentes (10) ont des profils rectilignes qui se développent dans une direction radiale par rapport audit axe longitudinal (X) défini par ledit arbre de rotation (7).

6. Alternateur (1) selon l'une quelconque des revendications de 3 à 5, **caractérisé en ce que** dans ladite zone annulaire de butée (12) sont présents des trous passants (13) qui sont configurés pour accueillir des moyens de connexion amovibles reliant ledit bouclier avant (6) audit boîtier de stator (2), chacun desdits trous passants (13) étant disposé au niveau d'une première zone angulaire (14a) dudit plan arrière (11) qui est comprise entre deux desdites fentes (10) qui sont consécutives l'une par rapport à l'autre définissant un premier angle (α).

7. Alternateur (1) selon la revendication 6, **caractérisé en ce que** dans ledit plan arrière (11) il y a également des secondes zones angulaires (14b) dont chacune est comprise entre deux fentes (10) qui sont consécutives l'une par rapport à l'autre, dont l'une au moins est extérieure à une première zone angulaire (14a) correspondante, qui définissent entre elles un deuxième angle (β) dont la largeur est inférieure à la largeur dudit premier angle (α).

8. Alternateur (1) selon l'une quelconque des revendications 6 ou 7, **caractérisé en ce que** dans ledit plan arrière (11) se trouvent des corps raidisseurs comprenant:
- des nervures latérales (15) qui délimitent lesdites fentes (10) et qui sont disposées l'une sur un bord et l'autre sur le bord opposé de chacune desdites fentes (10);
- des nervures centrales (16) présentes à l'intérieur de chacune desdites premières zones angulaires (14a) et comprises entre lesdites nervures latérales (15) délimitant chacune desdites premières zones angulaires (14a).

9. Alternateur (1) selon la revendication 8, **caractérisé en ce que** lesdites nervures latérales (15) et lesdites nervures centrales (16) font saillie dudit plan arrière (11) et se développent dans une direction radiale par rapport audit arbre de rotation (7).

10. Procédé de montage dudit alternateur (1) selon l'une quelconque des revendications précédentes comprenant les opérations suivantes:
- prévoir ledit boîtier de stator (2), ledit rotor (4), ledit arbre rotatif (7), ledit ventilateur (8), ledit bouclier arrière (5) et ledit bouclier avant (6);
- fixer ledit bouclier arrière (5) sur ledit boîtier de stator (2);
- accoupler ledit arbre de rotation (7) audit rotor (4);
- insérer ledit rotor (4) avec ledit arbre de rotation (7) à l'intérieur dudit boîtier de stator (2) jusqu'à ce que ladite première extrémité (7a) fait saillie du côté opposé dudit bouclier arrière (5);
- assembler ledit ventilateur (8) à ladite première extrémité (7a) dudit arbre de rotation (7) qui fait saillie à partir dudit boîtier de stator (2) du côté opposé audit bouclier arrière (5);
- disposer ledit bouclier avant (6) de manière coaxiale à ladite première extrémité (7a) dudit arbre de rotation (7);
- déplacer axialement ledit bouclier avant (6) vers ledit boîtier de stator (2),
**caractérisé en ce que** ledit déplacement axial dudit bouclier avant (6) se produit après avoir aligné chaque fente (10) avec une pale correspondante (9) dudit ventilateur (8) de sorte que chaque pale (9) passe à travers une fente correspondante (10) jusqu'à ce que ledit bouclier avant (6) accueille ledit ventilateur (8) et soit ensuite fixé audit boîtier de stator (2) par lesdits moyens de connexion amovibles.
